(19)

Europäisches
Patentamt
European
Patent Office
Office européen
des brevets

(11) EP 2 877 750 B1

(12) EUROPEAN PATENT SPECIFICATION

(45) Date of publication and mention
of the grant of the patent:
**07.09.2016 Bulletin 2016/36**

(21) Application number: **13755941.5**

(22) Date of filing: **24.07.2013**

(51) Int Cl.:
*F16B 3/00* *(2006.01)*        *F16B 5/07* *(2006.01)*

(86) International application number:
**PCT/DK2013/000047**

(87) International publication number:
**WO 2014/015875 (30.01.2014 Gazette 2014/05)**

(54) **PLATE ASSEMBLY**

PLATTENVERBINDUNG

ENSEMBLE DE PANNEAUX

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **24.07.2012 DK 201200474**

(43) Date of publication of application:
**03.06.2015 Bulletin 2015/23**

(73) Proprietor: **Outsidedesign ApS
6100 Haderslev (DK)**

(72) Inventor: **MEYHOFF, Henry
6100 Haderslev (DK)**

(74) Representative: **Nielsen, Charlotte
Tropa ApS
Aagade 97
8370 Hadsten (DK)**

(56) References cited:
**DE-A1- 1 750 297          DE-A1- 2 352 676
DE-U1-202004 000 502    FR-A1- 2 626 046**

Printed by Jouve, 75001 PARIS (FR)

## Description

### Field of invention

The present invention generally relates to a plate assembly comprising two plate members that are attached to one another. The present invention more particularly relates to a plate assembly comprising two metal plate members (preferably steel plates) that are joined by mechanical means.

### Prior art

A typical way of joining metal plates to form a plate assembly is to carry out a welding process, where the adjacent metal plates are joined by coalescence (caused by the welding process). In many cases a welding process requires a following treatment (e.g. a grinding process or another finishing). The heating process causes deformation in the form of rough spot and irregularities in the metal plates at the welding areas. This kind of deformation is normally referred to as warping or welding-distortion. Wraping of weldments during welding is caused by the non uniform heating and cooling of the welded joint that occur during a welding process. Metal that is subject to thermal expansion while being heated tends to be compressed by the surrounding cool structures. The internal stresses produced during the welding process causes the warping. The welding process is time consuming and the following treatment increases the production cost and production time.

Therefore, various alternative ways of joining metal plates have been developed. Among such alternatives is brazing and soldering. Brazing is a joining process in which a filler metal is melted and drawn into a capillary formed by the assembly of two or more work pieces. Brazing produces less thermal stresses than welding. Furthermore, brazed assemblies tend to be more ductile than weldments.

Soldering, on the other hand, is a joining process in which a filler is melted and drawn into a capillary to form a joint that is weaker than a joint made by a welding process.

Other alternatives such as riveting or mechanical attachments by using mechanical fastening means such as brackets and/or screws are widely used. Such methods are rather time consuming and require a following sealing process in order to achieve a waterproof joint.

DE 10 2009 051 154 A1 discloses a plate assembly comprising two metal sheet components that are mechanically connected to each other by forming a connecting section. Each metal sheet comprises a number of protrusions and a number of indentations arranged side by side. Each protrusion/indentation of the first metal sheet is configured to be mechanically attached to a corresponding indentation/protrusion of the second metal sheet. The indentations and the protrusions are essentially circular arced, and circular arcs of the indentations basically equal to the circular arcs of the protrusions.

This principle of attachment is suitable of providing a reliable attachment of the two metal sheets. However, when the distance between adjacent protrusions becomes large the mechanical strength of the engagement between corresponding protrusions and indentations is becomes low and when the distance between adjacent protrusions becomes small the mechanical strength of the protrusion is reduced dramatically.

Accordingly, there is a need for a plate assembly and a method which reduces or even eliminates the above mentioned disadvantages of the prior art.

Therefore, it is an object of the present invention to provide a plate assembly that is fast, easy and cost effective to produce.

It is also an object to provide a plate assembly that can be galvanized and assembled afterwards without need for any further treatment.

It is further an object to provide a plate assembly that has waterproof joints.

### Summary of the invention

The object of the present invention can be achieved by a plate assembly having the features as defined in claim 1 and by a method as defined in claim 9. Preferred embodiments are defined in the dependent sub claims and explained in the following description and illustrated in the accompanying drawings.

The plate assembly according to the invention is a plate assembly comprising:

- a first plate member provided with a number of protrusions and a number of indentations arranged side by side;
- a second plate member provided with:

    a number of protrusions and a number of indentations arranged side by side, where the protrusions are configured to be mechanically attached to a corresponding number of indentations of the first plate member, where the indentations are configured to be mechanically attached to a corresponding number of protrusions of the first plate member, where the indentations and the protrusions are circular arced, and the circular arcs of the indentations are basically equal to the circular arcs of the protrusions. The smallest width of the indentations corresponds to the radius of the circle corresponding to the circular arc of the protrusions. the method comprises the step of taking the first plate member and providing a joint section into the first plate member, where the smallest width of the indentations corresponds to the radius of the circle corresponding to the circular arc of the protrusions, where the method further comprises the step of taking the second plate member and providing a joint section into the second plate member, where the smallest width of the indentations corresponds to the radius of the circle corresponding to the circular arc of the protrusions.

Hereby it is achieved that the plate assembly is strong and that it can be produced in a fast and easy manner. Such plate assembly can be galvanized and assembled afterwards without need for any further treatment. The indentations and protrusions may be made by using a laser cutter by way of example.

The continuous geometry (circular arcs) of the indentations and the protrusions ensures that the geometry comprises no weak areas/points. Accordingly, an optimum force distribution between the plate members can be achieved. Hereby, the plate assembly according to the invention comprises a strong and robust connection between the plate members of the plate assembly.

The plate member is a member comprising a plate. The plate member may be made out of a sheet material, preferably a metal sheet material such as steel sheets. The plate member may be a plate.

In the present invention the arcs are circular arcs. This means that the arcs are sections of circles. The radius, however, may be selected in order to meet any size related requirements.

The protrusions of the first plate member are preferably configured to come into engagement with indentations of the second plate member and vice versa. By the term engagement is meant a mechanical attachment between the first plate member and the second plate member.

It is preferred that both the indentations and the protrusions are circular arced and that the smallest width of the indentations corresponds to the radius of the circle corresponding to the circular arc of the protrusions.

It is preferred that the first plate member and the second plate member are made in metal sheet material. The metal may by way of example be steel.

It is preferred that the circular arc of the protrusions corresponds to 250-270 degrees, preferably about 263 degrees of a circle.

It may be an advantage that the protrusions of one plate member are arranged in a manner so that the centres of the circles of which the geometry of the protrusions correspond are provided on line.

Similarly, it may be an advantage that the indentations of one plate member are arranged in a manner so that the centres of the circles of which the geometry of the indentations correspond are provided on line.

It is preferred that the protrusions and indentations of the first plate member constitute a first interlocking joint and that the protrusions and indentations of the second plate member constitute a second interlocking joint and that the first interlocking joint and the second interlocking joint are provided at plane areas of the plate members.

Hereby it becomes easier to provide an accurate attachment between the interlocking joint and the second interlocking joint.

It is also possible that the protrusions and indentations of the first plate member constitute a first interlocking joint and that the protrusions and indentations of the second plate member constitute a second interlocking joint and that the first interlocking joint and the second interlocking joint are provided at circular arced areas of the plate members.

It is preferred that the plate assembly constitutes a pipe member or is configured to constitute a pipe member when the plate members are joined.

Hereby the plate assembly can replace prior art pipe members joined e.g. by a welding process. Accordingly, production time and cost can be reduced significantly.

It may be beneficial that a gap is provided between the first plate member and the second plate member and that a joint is provided in the gap, where the joint is configured to maintaining the first plate member in a fixed position relative to the second plate member.

Hereby displacement of the first plate member is relative to the second plate member along the axis perpendicular to the first plate member and/or the second plate member can be prevented. Accordingly, the first plate member can be secured firmly to the second plate member.

By the term joint is meant a glue or adhesive that is added to the first plate member and the second plate member and in the gap between the first plate member and the second plate member. The joint may be a two component epoxy based adhesive by way of example.

Hereby it is achieved that a plate assembly having a waterproof joints can be provided.

It is possible to attach the plate members together by a punching or pressing process without use of any glue/adhesive/joint. Surprisingly, functional tests have shown that plate members according to the invention that are mechanically attached to each other by a punching or pressing process without use of any glue/adhesive/joint are as stable as corresponding plate members that are welded together.

It is preferred that both the first plate member and the second plate member are provided with a distance member.

Hereby a gap of equal thickness between the first plate member and the second plate member can be achieved. Accordingly, gluing the first plate member and the second plate member together is eased and a more reliable and strong attachment of the first plate member and the second plate member relative to each other can be achieved.

It is preferred that the plate members extend along a longitudinal axis Y and a traverse axis X extending perpendicular to the longitudinal axis Y.

It is preferred that the distance member extends along the transverse axis X and hereby is configured to provide a gap extending in the transverse direction between the first plate member and the second plate member.

The distance member may comprise one or more members extending as an extension of the plate member. It is preferred that the distance member has smaller or basically the same thickness as the plate member and that the distance member extends along the plane of one of the plate members.

It may be advantageous that the first plate member and the second plate member are made out of metal and that the first plate member and the second plate member have the same geometry and size.

It is preferred that the plate members comprise a first straight end side and a second straight end side and that the indentations of the first joint section are shaped as circular arcs arranged along circles having centres provided along a straight line that extends perpendicular to the first end side and to the second end side.

Accordingly, it is preferred that the first plate member comprises a first straight end side and a second straight end side and that the indentations of the first joint section are shaped as circular arcs arranged along circles having centres provided along a straight line that extends perpendicular to the first end side and to the second end side.

Furthermore, it is preferred that the protrusions of the first joint section are shaped as circular arcs arranged along circles of similar size as the circular arcs of the indentations having centres provided along a straight line that extends perpendicular to the first end side and the second end side.

It is preferred that the first plate member is provided with a first end member and a second end member and that the second plate member is provided with a first end member and a second end member, where the end members comprise a plane plate, where the first end member of the first plate member has a shape so that it is configured to be received by and bear against the first end member of the second plate member and where the second end member of the first plate member has a shape so that it is configured to be received by and bear against the second end member of the second plate member.

Hereby a strong joint section can be achieved. Especially at the end sides the properties of the joint section are enhanced.

It may be an advantage that the first plate member is provided with at least one intermediate member and that the second plate member is provided with at least one intermediate member, preferably extending parallel to at least one of the end members, where the intermediate members comprise a plane plate and where the at least one intermediate member of the first plate member has a shape so that it is configured to be received by and bear against at an intermediate member of the second plate member.

It is preferred that the first plate member and the second plate member are made out of thin metal sheets, preferably metal sheets having a thickness less than 20 mm, preferably less that 10 mm.

In one embodiment of a plate assembly according to the invention the plate members have a thickness of 3 mm.

It may be an advantage that the plate assembly is a pipe having two equal sized openings.

The plate members may be mechanically attached to each other (in order to prevent movement along the Z-axis) by mechanical means.

In a preferred embodiment according to the invention the plate assembly comprises two equal sized and equal shaped plate members having a C-profile, where the plate assembly is a pipe comprising four straight sides.

It is preferred that each interlocking joint comprises a number of joint sections each comprising three protrusions from the first plate member, three protrusions from the second plate member, three indentations from the first plate member and three indentations from the second plate member.

In one embodiment according to the invention the plate assembly comprises two equal sized and equal shaped plate members having a C-profile, where the plate assembly is a pipe comprising four straight sides and where the interlocking joint comprises one joint section comprising three protrusions from the first plate member, three protrusions from the second plate member, three indentations from the first plate member and three indentations from the second plate member.

In another embodiment according to the invention the plate assembly comprises two equal sized and equal shaped plate members having a C-profile, where the plate assembly is a pipe comprising four straight sides and where the interlocking joint comprises two joint sections comprising three protrusions from the first plate member, three protrusions from the second plate member, three indentations from the first plate member and three indentations from the second plate member, where the joint sections are interconnected by an intermediate member.

The method according to the invention is a method for manufacturing a plate assembly comprising:

- a first plate member provided with a number of protrusions and a number of indentations arranged side by side;
- a second plate member provided with:

a number of protrusions and a number of indentations arranged side by side, where the protrusions are configured to be mechanically attached to a corresponding number of indentations of the first plate member, where the indentations are configured to be mechanically attached to a corresponding number of protrusions of the first plate member, where the indentations and protrusions are circular arced, where the circular arcs of the indentations are basically equal to the circular arcs of the protrusions. The method comprises the step of taking the first plate and providing a joint section into the first plate member, where the smallest width of the indentations corresponds to the radius of the circle corresponding to the circular arc of the protrusions, where the method further comprises the step of taking the second plate member and providing a joint section into the second plate member, where the smallest width of the indentations corresponds to the radius of the circle corresponding to the circular arc of the protrusions.

Hereby a plate assembly with improved strength can be produced in a fast and easy manner. The plate assembly can be galvanized and assembled afterwards without need for any further treatment.

The cutting process may be carried out by using a laser cutter of any other suitable cutting process (e.g. a punching process).

It is preferred that the method comprises the step of providing a first plate member and a second plate member and assembling the first plate member and the second plate member by mechanically pressing and/or punching the plate members together and optionally providing an adhesive joint at the gap between the first plate member and the second plate member.

It may be an advantage that the method comprises the step of galvanizing the plate members after the joint sections are provided.

It may be beneficial that the method includes the step of bending at least one of the plate members.

It is preferred that the method comprises the steps of providing two basically identical plate members having basically identical joint sections, where the method further comprises the step of assembling the plate members.

It is preferred that the method includes the step of providing two equal shaped plate members that are bend and assembled to form a pipe structure. A pipe structure according to the invention comprises plate members that are joined in a way that provides great sideways stability. According, the plate members are prevented from being moved relative to each other.

## Description of the Drawings

The invention will become more fully understood from the detailed description given herein below. The accompanying drawings are given by way of illustration only, and thus, they are not limitative of the present invention. In the accompanying drawings:

Fig. 1    shows a close-up perspective view of two plate members of a plate assembly according to the invention;
Fig. 2    shows an assembled plate assembly and a plate member having a C-profile according to the invention;
Fig. 3    shows perspective views of a pipe according to the invention (in a disassembled state and in an assembled state, respectively);
Fig. 4    shows a schematically view of the geometry of the interlocking joint according to the invention;
Fig. 5    shows two perspective views of two pipes according to the invention and
Fig. 6    shows two views of another pipe according to the invention.

## Detailed description of the invention

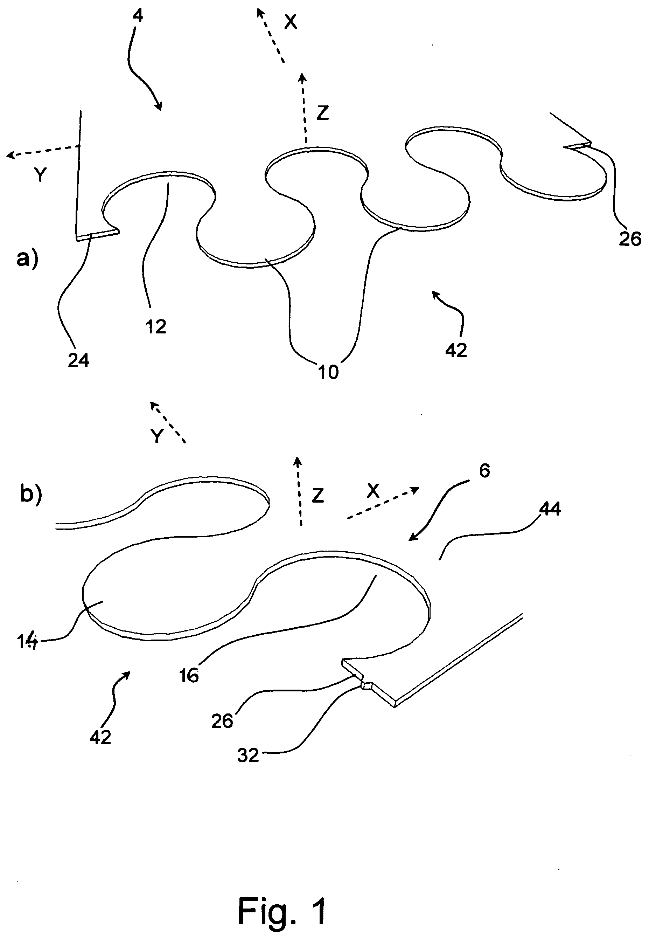

Referring now in detail to the drawings for the purpose of illustrating preferred embodiments of the present invention, a plate member 4 of a plate assembly according to the invention is illustrated in Fig. 1.

Fig. 1 a) is a perspective side view of a plate member 4 of a plate assembly according to the invention. The plate member 4 comprises a plane plate portion 44 having a joint section 42 with three protrusions 10 and three indentations 12. The protrusions 10 and indentations 12 are arranged side by side in an alternating pattern, where every second element is an indentation 12 and every other second element is a protrusion 10. All of the protrusions 10 and indentations 12 have a circular arced shape.

In the first end of the joint section 42 a first straight end member 24 is arranged next to the outer most indentation 12. In the second end of the joint section 42 a second straight end member 26 (of same size and geometry as the first straight end member 24) is arranged next to the outer most protrusion 10. The protrusions 10 and the indentations 12 extend along the transverse axis X of the plate member 4, while the first straight end member 24 and the second straight end member 26 extend along the longitudinal axis Y of the plate member 4. The axis Z indicated in Fig. 1 a) extends perpendicular to the plane plate portion 44.

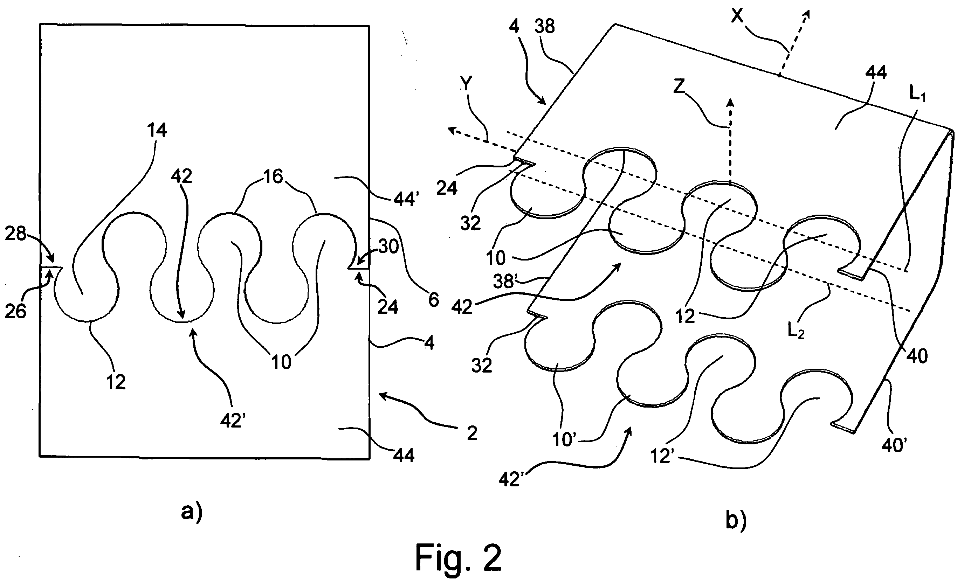

The plate member 4 is configured to receive and be mechanically connected to a plate member (6 see Fig. 2 a) having a corresponding joint section. When the plate members 4, 6 are joint, movement of the plate members 4, 6 relative to each other along the X-axis and along the Y-axis is restricted, due to the engagement of corresponding protrusions 10 and indentations 12. However, movement of the plate members 4, 6 relative to each other along the Z-axis would not be restricted by the geometry of the joint section 42. Therefore, it is preferred that an adhesive joint or mechanical means (e.g. a fixing bracket) is used to secure the plate members 4, 6 to each other.

Fig 1 b) illustrates a close-up perspective view of another plate member 6 according to the invention. The plate member 6 comprises a plane plate portion 44 and a joint section 42 almost similar to the joint section 42 shown in Fig. 1 a). The joint section 42 comprises an indentation 12 arranged next to a straight end member 26 and a protrusion 10 is arranged next to the indentation 12. The X-axis, Y-axis and a Z-axis of the plate member 6 are indicated.

In the end of the joint section 42 a straight end member 26 is arranged. A distance member 32 is provided at the central area of the straight end member 26. The distance member 32 extends along the X-axis of the plate member 6. The distance member 32 secures that a gap is provided between the plate member 6 and plate member 4 (e.g. of the type shown in Fig. 1 a), when these plate members 4, 6 are joint. The gap may be filled with an adhesive joint in order to provide enhanced stability and strength in the direction of the Z-axis. The adhesive joint will ensure that a fixed distance is kept between the plate members 4, 6. Accordingly, stability in the direction of the X-axis and the Y-axis is achieved.

Fig. 2 a) illustrates a top view of a plate assembly 2 according to the invention. The plate assembly 2 comprises a first plate member 4 having a plane plate portion 44 and a second plate member 6 having a plane plate portion 44'. The first plate member 4 is secured to a second plate member 6 by means of protrusions 10 of the first plate member 4 engaged to corresponding indentations 16 of the second plate member 6 and similarly by means of protrusions 14 of the second plate member 6 engaged to corresponding indentations 12 of the first plate member 4.

The plate members 4, 6 may be assembled by punching the plate members 4, 6 together. Due to the matching geometry of the engaging pairs of protrusions 10, 14 and indentations 12, 16, respectively, the plate members 4, 6 are restricted from being displaced in a direction within the plane of the plane plate portions 44, 44'.

Fig. 2 b) illustrates a perspective view of a plate member 4 according to the invention. The plate member has a plane plate portion 44 extending along the X-axis and the Y-axis of the plate member 4. The Z-axis extends perpendicular to the plane plate portion 44.

The plate member 4 comprises a first joint section 42 with three protrusions 10 each arranged next to a corresponding indentation 12. In the first end of the first joint section 42 a first straight end member 24 is arranged next to the outer most protrusion 10. A distance member 32 like the one illustrated in Fig. 1 b) is provided at the central area of the first straight end member 24. The distance member extends along the X-axis of the plate member 4. In the other end of the first joint section 42 a second straight end member 26 of similar geometry and size as the first straight end member 24 is arranged. The second straight end member 26 is arranged next to the outer most indentation 12.

The plate member 4 has a C-profile (seen from the Y-axis) and the plate member 4 comprises a joint section 42' with three protrusions 10' each arranged next to a corresponding indentation 12'. The second joint section 42' has the same shape and size as the first joint section 42.

The plate member 4 is configured to be attached to a plate member of similar size and shape (like illustrated in Fig. 2 a).

The first plate member 4 comprises a first straight end side 38 and a second straight end side 40. The first plate member 4 also comprises a third straight end side 38' and a fourth straight end side 40'.

The indentations 12 of the first joint section 42 are shaped as circular arcs formed arranged along circles having centres provided along a straight line (indicated with a dotted line $L_1$) that extends perpendicular to the first end side 38 and the second end side 40.

The protrusions 10 of the first joint section 42 are also shaped as circular arcs formed arranged along circles (of similar size as the circular arcs of the indentations 12) having centres provided along a straight line (indicated with a dotted line $L_2$) that extends perpendicular to the first end side 38 and the second end side 40.

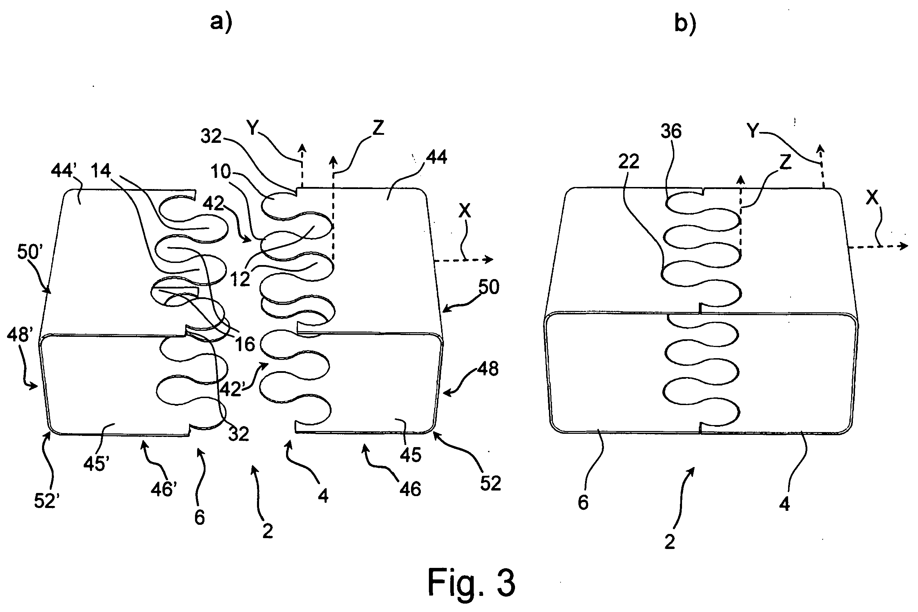

Fig. 3 a) illustrates a perspective top view of a plate assembly 2 according to the invention. The plate assembly 2 shown in Fig. 3 a) is in a disassembled state. The plate assembly 2 comprises a first plate member 4 similar to the plate member 4 shown in Fig. 2 b).

The first plate member 4 has a first plane plate portion 44 and a second plane plate portion 46 extending parallel to the first plane plate portion 44. The first plate member 4 is made out of a steel plate that is cut (e.g. by use of a laser cutter, a punching process or another suitable process) in order to achieve end sections 42, 42' with indentations 12 and protrusions 10 like shown in Fig. 3 a).

The steel plate has been bend 90 degrees in order to achieve a first arced plate portion 50 and a second arced plate portion 52. In between the first arced plate portion 50 and the second arced plate portion 52 a third plane plate portion 48 is provided. The third plane plate portion 48 extends parallel to the Y-axis and to the Z-axis, while the first plane plate portion 44 as well as the second plane plate portion 46 extends parallel to the X-axis and the Y-axis.

Next to the first plate member 4 a second plate member 6 is arranged.

The second plate member 6 has the same shape and size as the first plate member 4. The second plate member 6 comprises a first plate portion 44' and a second plane plate portion 46'. The second plane plate portion extends parallel to the first plane plate portion 44'. The second plate member 6 moreover comprises a third plane plate portion 48' extending between the first plane plate portion 44' and the second plane plate portion 46'. A first arced plate portion 50' connects the first plane plate portion 44' and the third plane plate portion 48', while a second arced plate portion 52' connects the second plane plate portion 46' and the third plane plate portion 48'.

The second plate member 6 comprises protrusions 14 and indentations 16. The protrusions 14 of the second plate member 6 match the shape and geometry of the indentations 12 of the first plate member 4. The indentations 16 of the second plate member 6 are configured to receive the protrusions 10 of the first plate member 4. Accordingly, the indentations 16 of the second plate member 6 matches (corresponds to the geometry and shape of) the protrusions 10 of the first plate member 4.

Both the first plate member 4 and the second plate member 6 are provided with distance members 32.

Fig. 3 b) illustrates a perspective view of the plate assembly 2 shown in Fig. 3 a) in an assembled state. The plate assembly 2 comprises a first plate member 4 that is attached to a second plate member 6. The distance members 32 (see Fig. 1b and Fig 2 b) ensure that a gap 36 is provided between the first plate member 4 and the second plate member 6. The gap 36 is filled with an adhesive joint 22 that prevents the first plate member 4 and the second plate member 6 from being displaced relative to one another along the Z-axis. Since a gab 36 is provided between the plate members 4, 6 and since the gab 36 is filled with an adhesive joint 22, the joint 22 prevents movement of the first plate member 4 relative to and the second plate member 6 along the X-axis and along the Y-axis.

The plate assembly 2 constitutes a pipe structure. This pipe structure is suitable for being used as a flower bowl by way of example. The joint 22 preferably provides a sealing attachment of the first plate member 4 relative to the second plate member 6. The joint 22 may be a two component epoxy based adhesive.

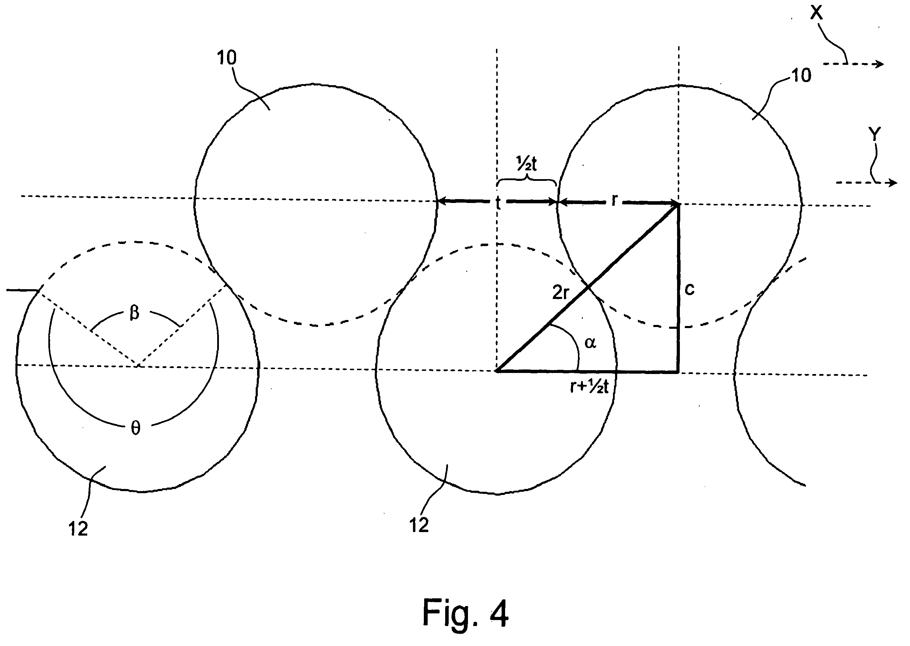

Fig. 4 illustrates a schematically view of the geometry of the protrusions 10 and the indentations 12 of a plate member according to the invention. The geometry of the protrusions 10 correspond to the geometry of the indentations 12. The basic geometry of the protrusions 10 and the indentations 12 is indicated with solid lines. It can be seen that the basic geometry of the protrusions 10 and the indentations 10 is a section (circular arc of an angle θ) of a circle having radius r. Accordingly, the remaining part of the circle (indicated with a dotted line) is a circular arc of an angle β.

The protrusions 10 are arranged in a manner so that the centres of the circles (of which the geometry of the protrusions 10 correspond) are provided on line.

Similarly, the indentations 12 are arranged in a manner so that the centres of the circles (of which the geometry of the indentations 12 correspond) are provided on line.

In order to achieve the most optimal geometry several tests have been set up. It was found that the most optimum geometry can be achieved by defining that the shortest distance t between the two protrusions 10 being adjacent to an indentation 12 to be equal or basically equal to the radius r of the circle. This can be expressed in the following way:

$$(1) \qquad t = r$$

The triangle has a first cathetus with magnitude r+½t and a second cathetus with magnitude c. As it can be seen from the triangle in Fig. 4 the magnitude of the hypotenuse is 2r (two times the radius). Thus, it follows from the Pythagorean Theorem that:

$$(2) \qquad (2r)^2 = \left(r + \tfrac{1}{2}t\right)^2 + c^2 = \left(\tfrac{3}{2}r\right)^2 + c^2 \ \text{(since t=r)}$$

Therefore, it can be derived that:

$$(3) \qquad c^2 = (2r)^2 - \left(\tfrac{3}{2}r\right)^2 = 4r^2 - \tfrac{9}{4}r^2 \Rightarrow c = \sqrt{\tfrac{7}{4}}\, r$$

Moreover, it can be derived that the angle α is given by:

$$(4) \qquad \alpha = \arccos(\tfrac{\frac{1}{2}r}{2r}) = \arccos(\tfrac{3}{4}) \approx 41.4°$$

Accordingly, it follows that:

$$(5) \qquad \theta = 180° + 2\alpha \approx 262.8°$$

Moreover, it can be derived that:

$$(6) \qquad \beta = 180° - 2\alpha \approx 97.2°$$

Obviously, the geometry shown in Fig. 4 may be changed slightly. However, it is preferred that t and r have basically same magnitude. When t is significantly smaller than r the plate member becomes too week. On the other hand, when t is significantly larger than r the mechanical strength of the engagement between corresponding protrusions 10 and indentations 16 is reduced dramatically. The compromise where t and r have basically same magnitude seems to be the optimum solution.

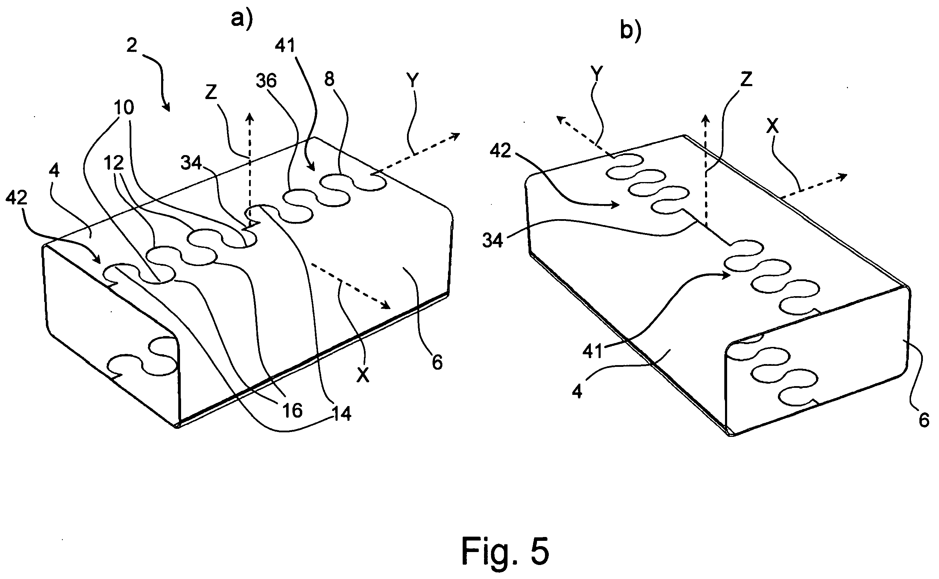

Fig. 5 a) illustrates a perspective view of a plate assembly 2 according to the invention. The plate assembly 2 comprises a first plate member 4 attached to a second plate member 6. The first plate member 4 comprises a first joint section 41 and a second joint section 42 that is attached to two corresponding joint sections of the second plate member 6. The joint sections 41, 42 are interlocking joints configured to mechanically secure the first plate member 4 to the second plate member 6. The joint sections 41, 42 comprise protrusions 10 and indentations 12 that are attached to corresponding indentations 16 and protrusions 14, respectively. This engagement of corresponding protrusions 10, 14 and indentations 12, 16 prevents the first plate member 4 from being displaced relative to the second plate member 6 relative to the X-axis and the Y-axis.

An adhesive joint is provided in the gap 36 between the first plate member 4 and the second plate member 6. The adhesive joint in the gap 36 prevents the first plate member 4 from being displaced relative to the second plate member 6 along the Z-axis.

A rather small intermediate member 34 connects the first joint section 41 and the second joint section 42.

Fig. 5 b) illustrates a perspective view of another plate assembly 2 according to the invention. The plate assembly 2 is almost similar to the plate assembly 2 shown in fig. 5 a). The plate assembly 2 comprises a first plate member 4 attached to a second plate member 6. The first plate member 4 comprises a first joint section 41 and a second joint 42 connected by an intermediate member 34 that is significantly larger than the one shown in Fig. 5 a).

The plate members 4, 6 may be made from sheet plates of metal, preferably steel plates. The joint sections 41, 42 may be made by any suitable cutting process e.g. by using a laser cutter. Hereafter the plate members 4, 6 may be galvanized and optionally be subject to a bending process if required before being assembled.

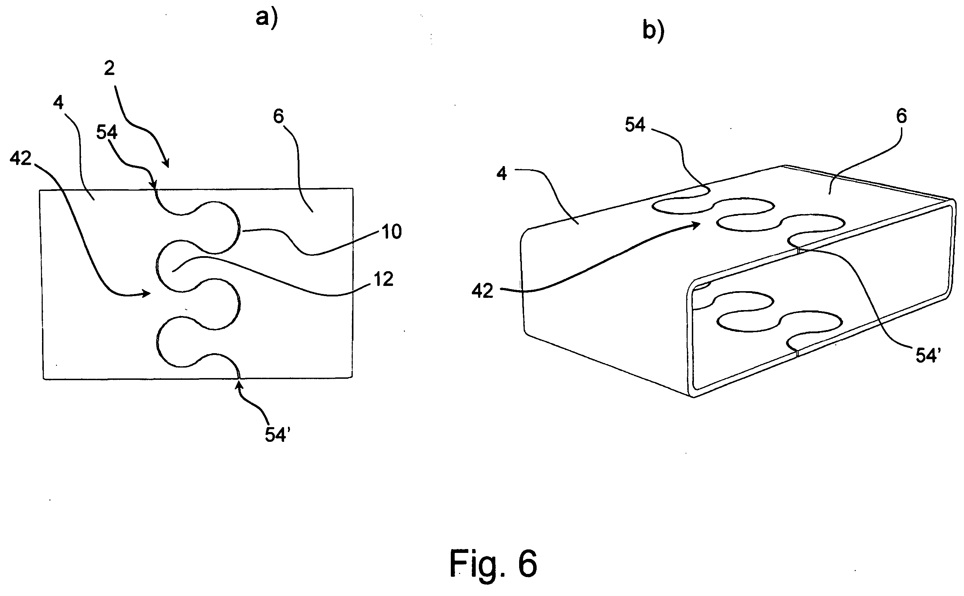

Fig. 6 a) illustrates a top view of a plate assembly 2 according to the invention, while Fig. 6 b) illustrates a perspective view of the plate assembly 2. The plate assembly 2 is formed as a pipe. The pipe comprises a first plate member 4 and a second plate member 6 according to the invention. The plate members 4, 6 are attached to one another along a joint section 42. The joint section 42 is slightly different from the joint sections shown in the other figures, however, the joint section 42 still provides a strong, reliable attachment between first plate member 4 and a second plate member 6.

The joint section 42 comprises no end members or intermediate members. Moreover, the joint section 42 begins at the top points 54, 54' of the circular arcs of the indentations 12 of the first plate member 4.

The continuous geometry of the circular arcs of the indentations 12 and the protrusions 10 provides an optimum force distribution between the first plate member 4 and the second plate member 6. Accordingly, the plate assembly 2 according to the invention comprises a strong and robust connection (joint section 42) between the plate members 4, 6 of the plate assembly 2.

**List of reference numerals**

| 2 | - Plate assembly |
| 4 | - First plate member |
| 6 | - Second plate member |
| 8 | - Interlocking joint |

| 10, 10' | - Protrusion |
| 12, 12' | - Indentation |
| 14 | - Protrusion |
| 16 | - Indentation |
| 18 | - First opening |
| 20 | - Second opening |
| 22 | - Joint (adhesive) |
| 24, 26 | - End member |
| 28, 30 | - End member |
| 32, 32' | - Distance member |
| 34 | - Intermediate member |
| 36, 35 | - Gap |
| 38, 38' | - End side |
| 40, 40' | - End side |
| 41, 42, 42' | - Joint section |
| 44, 44' | - Plane plate portion |
| 46, 46 | - Plane plate portion |
| 48, 48' | - Plane plate portion |
| 50, 50' | - Arced plate portion |
| 52, 52' | - Arced plate portion |
| 54, 54' | - Top point |
| X | - X-axis |
| Y | - Y-axis |
| Z | - Z-axis |
| $\alpha$ | - Angle |
| $\beta$ | - Angle |
| $\theta$ | - Angle |
| r | - Radius |
| t | - Distance |
| c | - Distance |
| $L_1$ | - Line |
| $L_2$ | - Line |

## Claims

1. A plate assembly (2) comprising:

   - a first plate member (4) provided with a number of protrusions (10) and a number of indentations (12) arranged side by side;
   - a second plate member (6) provided with: a number of protrusions (14) and a number of indentations (16) arranged side by side, where the protrusions (14) are configured to be mechanically attached to a corresponding number of indentations (12) of the first plate member (4), where the indentations (16) are configured to be mechanically attached to a corresponding number of protrusions (10) of the first plate member (4), where the indentations (12, 16) and the protrusions (10, 14) are circular arced, and where the circular arcs of the indentations (12, 16) are basically equal to the circular arcs of the protrusions (10, **14)characterised in that** the smallest width (t) of the indentations (12, 16) corresponds to the radius (r) of the circle corresponding to the circular arc of the protrusions (10, 14).

2. A plate assembly (2) according to claim 1 **characterised in that** the protrusions (10) and indentations (12) of the first plate member (4) constitute a first interlocking joint (8) and that the protrusions (14) and indentations (16) of the second plate member (6) constitute a second interlocking joint (8) and that the first interlocking joint (8) and the second interlocking joint (8) are provided at plane areas of the plate members (4, 6).

3. A plate assembly (2) according to claim 1 or claim 2 **characterised in that** the plate assembly (2) constitutes a pipe member (2) or is configured to constitute a pipe member (2) when the plate members (4, 6) are joined.

4. A plate assembly (2) according to one of the preceding claims **characterised in that** a gap (36) is provided between the first plate member (4) and the second plate member (6) and that a joint (22) is provided in the gap (36), where the joint (22) is configured to maintaining the first plate member (4) in a fixed position relative to the second plate member (6).

5. A plate assembly (2) according to one of the preceding claims **characterised in that** the first plate member (4) and the second plate member (6) are provided with a distance member (32)

6. A plate assembly (2) according to one of the preceding claims **characterised in that** the first plate member (4) and the second plate member (6) are made out of metal and that the first plate member (4) and the second plate member (6) have the same geometry and size.

7. A plate assembly (2) according to one of the preceding claims **characterised in that** the plate members (4) comprise a first straight end side (38, 38') and a second straight end side (40, 40') and that the indentations (12) of the first joint section (42) are shaped as circular arcs formed arranged along circles having centres provided along a straight line ($L_1$) that extends perpendicular to the first end side (38, 38') and to the second end side (40, 40').

8. A plate assembly (2) according to one of the preceding claims **characterised in that** the first plate member (4) is provided with a first end member (24) and a second end member (26) and that the second plate member (6) is provided with a first end member (28) and a second end member (30), where the end members (24, 26, 28, 30) comprise a plane plate, where the first end member (24) of the first plate member (4) has a shape so that it is configured to be received by and bear against the first end member (28) of the second plate member (6) and where the second end member (26) of the first plate member (4) has a shape so that it is configured to be received by and bear against the second end member (30) of the second plate member (6).

9. A method for manufacturing a plate assembly (2) comprising:

   - a first plate member (4) provided with a number of protrusions (10) and a number of indentations (12) arranged side by side;
   - a second plate member (6) provided with:

   a number of protrusions (14) and a number of indentations (16) arranged side by side, where the protrusions (14) are configured to be mechanically attached to a corresponding number of indentations (12) of the first plate member (4), where the indentations (16) are configured to be mechanically attached to a corresponding number of protrusions (10) of the first plate member (4), where the indentations (12, 16) and protrusions (10, 14) are circular arced, where the circular arcs of the indentations (12, 16) are basically equal to the circular arcs of the protrusions (10, 14) **characterised in that** the method comprises the step of taking the first plate member (4) and providing a joint section (41, 42) into the first plate member (4), where the smallest width (t) of the indentations (12) corresponds to the radius (r) of the circle corresponding to the circular arc of the protrusions (10), where the method further comprises the step of taking the second plate member (6) and providing a joint section (41, 42) into the second plate member (6), where the smallest width (t) of the indentations (16) corresponds to the radius (r) of the circle corresponding to the circular arc of the protrusions (14).

10. A method according to claim 9 **characterised in that** the method comprises the step of providing a first plate member (4) and a second plate member (6) and assembling the first plate member (4) and the second plate member (6) by mechanically pressing and/or punching the plate members (4, 6) together and optionally providing an adhesive joint at the gap (34) between the first plate member (4) and the second plate member (6).

**Patentansprüche**

1. Plattenanordnung (2) umfassend:

   - ein erstes Plattenelement (4), das mit einer Anzahl von Fortsätzen (10) und einer Anzahl von Einkerbungen (12) versehen ist, die Seite an Seite angeordnet sind;
   - ein zweites Plattenelement (6), das versehen ist mit: einer Anzahl von Fortsätzen (14) und einer Anzahl von Einkerbungen (16), die Seite an Seite angeordnet sind, wobei die Fortsätze (14) ausgebildet sind, um mechanisch an der entsprechenden Anzahl von Einkerbungen (12) des ersten Plattenelements (4) angebracht zu werden, wobei die Einkerbungen (16) ausgebildet sind, um mechanisch an der entsprechenden Anzahl von Fortsätzen (10) des ersten Plattenelements (4) angebracht zu werden, wobei die Einkerbungen (12, 16) und die Fortsätze (10, 14) kreisförmig gekrümmt sind, und wobei die kreisförmigen Krümmungen der Einkerbungen (12, 16) im Prinzip den kreisförmigen Krümmungen der Fortsätze (10, 14) gleichen, **dadurch gekennzeichnet, dass** die kleinste Breite (t) der Einkerbungen (12, 16) dem Radius (r) des Kreises entspricht, der dem kreisförmigen Bogen der Fortsätze (10, 14) entspricht.

2. Plattenanordnung (2) nach Anspruch 1, **dadurch gekennzeichnet, dass** die Fortsätze (10) und Einkerbungen (12) des ersten Plattenelements (4) eine erste Verriegelungsverbindung (8) bilden, und dass die Fortsätze (14) und Einkerbungen (16) des zweiten Plattenelements (6) eine zweite Verriegelungsverbindung (8) bilden, und dass die erste Verriegelungsverbindung (8) und die zweite Verriegelungsverbindung (8) an ebenen Bereichen der Plattenelemente (4, 6) vorgesehen sind.

3. Plattenanordnung (2) nach Anspruch 1 oder Anspruch 2, **dadurch gekennzeichnet, dass** die Plattenanordnung (2) ein Rohrelement (2) bildet oder dazu ausgebildet ist, ein Rohrelement (2) zu bilden, wenn die Plattenelemente (4, 6) zusammengefügt sind.

4. Plattenanordnung (2) nach einem der vorhergehenden Ansprüche, **dadurch gekennzeichnet, dass** ein Spalt (36) zwischen dem ersten Plattenelement (4) und dem zweiten Plattenelement (6) vorgesehen ist, und dass eine Verbindung (22) in dem Spalt (36) vorgesehen ist, wobei die Verbindung (22) dazu ausgebildet ist, das erste Plattenelement (4) in einer fixierten Stellung relativ zu dem zweiten Plattenelement (6) zu halten.

5. Plattenanordnung (2) nach einem der vorhergehenden Ansprüche, **dadurch gekennzeichnet, dass** das erste Plattenelement (4) und das zweite Plattenelement (6) mit einem Beabstandungselement (32) versehen sind.

6. Plattenanordnung (2) nach einem der vorhergehenden Ansprüche, **dadurch gekennzeichnet, dass** das erste Plattenelement (4) und das zweite Plattenelement (6) aus Metall hergestellt sind, und dass das erste Plattenelement (4) und das zweite Plattenelement (6) dieselbe Geometrie und Größe aufweisen.

7. Plattenanordnung (2) nach einem der vorhergehenden Ansprüche, **dadurch gekennzeichnet, dass** die Plattenelemente (4) eine erste gerade Endseite (38, 38') und eine zweite gerade Endseite (40, 40') umfassen, und dass die Einkerbungen (12) des ersten Verbindungsabschnitts (42) als kreisförmige Krümmungen geformt sind, die entlang von Kreisen mit Mittelpunkten angeordnet sind, die entlang einer geraden Linie ($L_1$) vorgesehen sind, die sich senkrecht auf die erste Endseite (38, 38') und die zweite Endseite (40, 40') erstreckt.

8. Plattenanordnung (2) nach einem der vorhergehenden Ansprüche, **dadurch gekennzeichnet, dass** das erste Plattenelement (4) mit einem ersten Endelement (24) und einem zweiten Endelement (26) versehen ist, und dass das zweite Plattenelement (6) mit einem ersten Endelement (28) und einem zweiten Endelement (30) versehen ist, wobei die Endelemente (24, 26, 28, 30) eine ebene Platte umfassen, wobei das erste Endelement (24) des ersten Plattenelements (4) eine solche Gestalt aufweist, dass sie dazu ausgebildet ist, um von dem ersten Endelement (28) des zweiten Plattenelements (6) aufgenommen zu werden und gegen dieses anzuliegen, und wobei das zweite Endelement (26) des ersten Plattenelements (4) eine solche Gestalt aufweist, dass sie dazu ausgebildet ist, um von dem zweiten Endelement (30) des zweiten Plattenelements (6) aufgenommen zu werden und gegen dieses anzuliegen.

9. Verfahren zur Herstellung einer Plattenanordnung (2), die Folgendes umfasst:

- ein erstes Plattenelement (4), das mit einer Anzahl von Fortsätzen (10) und einer Anzahl von Einkerbungen (12) versehen ist, die Seite an Seite angeordnet sind;
- ein zweites Plattenelement (6), das versehen ist mit:

einer Anzahl von Fortsätzen (14) und einer Anzahl von Einkerbungen (16), die Seite an Seite angeordnet sind, wobei die Fortsätze (14) ausgebildet sind, um mechanisch an der entsprechenden Anzahl von Einkerbungen (12) des ersten Plattenelements (4) angebracht zu werden, wobei die Einkerbungen (16) ausgebildet sind, um mechanisch an der entsprechenden Anzahl von Fortsätzen (10) des ersten Plattenelements (4) angebracht zu werden, wobei die Einkerbungen (12, 16) und die Fortsätze (10, 14) kreisförmig gekrümmt sind, wobei die kreisförmigen Krümmungen der Einkerbungen (12, 16) im Prinzip den kreisförmigen Krümmungen der Fortsätze (10, 14) gleichen, **dadurch gekennzeichnet, dass** das Verfahren den Schritt umfasst: Nehmen des ersten Plattenelements (4) und Bereitstellen eines Verbindungsabschnitts (41, 42) in dem ersten Plattenelement (4), wobei die kleinste Breite (t) der Einkerbungen (12) dem Radius (r) des Kreises entspricht, der dem kreisförmigen Bogen der Fortsätze (10) entspricht, wobei das Verfahren des Weiteren den Schritt umfasst: Nehmen des zweiten Plattenelements (6) und Bereitstellen eines Verbindungsabschnitts (41, 42) in dem zweiten Plattenelement (6), wobei die kleinste Breite (t) der Einkerbungen (16) dem Radius (r) des Kreises entspricht, der dem kreisförmigen Bogen der Fortsätze (14) entspricht.

10. Verfahren nach Anspruch 9, **dadurch gekennzeichnet, dass** das Verfahren den Schritt umfasst: Bereitstellen eines ersten Plattenelements (4) und eines zweiten Plattenelements (6) und Zusammenbauen des ersten Plattenelements (4) und des zweiten Plattenelements (6) durch mechanisches Zusammenpressen oder -stoßen der Plattenelemente (4, 6), und optional Bereitstellen einer Klebeverbindung an dem Spalt (34) zwischen dem ersten Plattenelement (4) und dem zweiten Plattenelement (6).

## Revendications

1. Ensemble de plaque (2) comprenant:

   - un premier élément de plaque (4) muni d'un certain nombre de saillies (10) et d'un certain nombre d'échancrures (12) agencées côte à côte;
   - un deuxième élément de plaque (6) muni: d'un certain nombre de saillies (14) et d'un certain nombre d'échancrures (16) agencées côte à côte, où les saillies (14) sont configurées pour être mécaniquement fixées à un nombre correspondant d'échancrures (12) du premier élément de plaque (4), où les échancrures (16) sont configurées pour être mécaniquement fixées à un nombre correspondant de saillies (10) du premier élément de plaque (4), où les échancrures (12, 16) et les saillies (10, 14) sont en forme d'arcs de cercle, et où les arcs de cercle des échancrures (12, 16) sont essentiellement égaux aux arcs de cercle des saillies (10, 14) **caractérisé en ce que** la plus petite largeur (t) des échancrures (12, 16) correspond au rayon (r) du cercle correspondant à l'arc de cercle des saillies (10, 14).

2. Ensemble de plaque (2) selon la revendication 1, **caractérisé en ce que** les saillies (10) et les échancrures (12) du premier élément de plaque (4) constituent un premier joint d'interverrouillage (8) et **en ce que** les saillies (14) et les échancrures (16) du deuxième élément de plaque (6) constituent un deuxième joint d'interverrouillage (8) et **en ce que** le premier joint d'interverrouillage (8) et le deuxième joint d'interverrouillage (8) sont prévus au niveau de zones planes des éléments de plaque (4, 6).

3. Ensemble de plaque (2) selon la revendication 1 ou 2, **caractérisé en ce que** l'ensemble de plaque (2) constitue un élément de tuyau (2) ou est configuré pour constituer un élément de tuyau (2) lorsque les éléments de plaque (4, 6) sont joints.

4. Ensemble de plaque (2) selon l'une des revendications précédentes, **caractérisé en ce qu'**un espace (36) est prévu entre le premier élément de plaque (4) et le deuxième élément de plaque (6) et **en ce qu'**un joint (22) est prévu dans l'espace (36), où le joint (22) est configuré pour maintenir le premier élément de plaque (4) dans une position fixe par rapport au deuxième élément de plaque (6).

5. Ensemble de plaque (2) selon l'une des revendications précédentes, **caractérisé en ce que** le premier élément de plaque (4) et le deuxième élément de plaque (6) sont munis d'un élément d'écartement (32)

6. Ensemble de plaque (2) selon l'une des revendications précédentes, **caractérisé en ce que** le premier élément de plaque (4) et le deuxième élément de plaque (6) sont réalisés en métal et **en ce que** le premier élément de plaque (4) et le deuxième élément de plaque (6) ont la même géométrie et la même taille.

7. Ensemble de plaque (2) selon l'une des revendications précédentes, **caractérisé en ce que** les éléments de plaque (4) comprennent un premier côté d'extrémité droit (38, 38') et un deuxième côté d'extrémité droit (40, 40'), et **en ce que** les échancrures (12) de la première section de joint (42) sont en forme d'arcs de cercle formés et agencés le long de cercles ayant des centres prévus le long d'une ligne droite ($L_1$) qui s'étend perpendiculairement au premier côté d'extrémité (38, 38') et au deuxième côté d'extrémité (40, 40').

8. Ensemble de plaque (2) selon l'une des revendications précédentes, **caractérisé en ce que** le premier élément de plaque (4) est muni d'un premier élément d'extrémité (24) et d'un deuxième élément d'extrémité (26) et **en ce que** le deuxième élément de plaque (6) est muni d'un premier élément d'extrémité (28) et d'un deuxième élément d'extrémité (30), où les éléments d'extrémité (24, 26, 28, 30) comprennent une plaque plane, où le premier élément d'extrémité (24) du premier élément de plaque (4) a une forme de sorte qu'il soit configuré pour être reçu par le premier élément d'extrémité (28) du deuxième élément de plaque (6) et pour s'appuyer contre celui-ci et où le deuxième élément d'extrémité (26) du premier élément de plaque (4) a une forme de sorte qu'il soit configuré pour être reçu par le deuxième élément d'extrémité (30) du deuxième élément de plaque (6) et pour s'appuyer contre celui-ci.

9. Procédé de fabrication d'un ensemble de plaque (2) comprenant:

   - un premier élément de plaque (4) muni d'un certain nombre de saillies (10) et d'un certain nombre d'échancrures (12) agencées côte à côte;
   - un deuxième élément de plaque (6) muni:

   d'un certain nombre de saillies (14) et d'un certain nombre d'échancrures (16) agencées côte à côte, où les saillies (14) sont configurées pour être mécaniquement fixées à un nombre correspondant d'échancrures (12) du premier élément de plaque (4), où les échancrures (16) sont configurées pour être mécaniquement fixées à un nombre correspondant de saillies (10) du premier élément de plaque (4), où les échancrures (12, 16) et les saillies (10, 14) sont en forme d'arcs de cercle, où les arcs de cercle des échancrures (12, 16) sont essentiellement égaux aux arcs de cercle des saillies (10, 14) **caractérisé en ce que** le procédé comprend l'étape qui consiste à prendre le premier élément de plaque (4) et à fournir une section de joint (41 42) dans le premier élément de plaque (4), où la plus petite largeur (t) des échancrures (12) correspond au rayon (r) du cercle correspondant à l'arc de cercle des saillies (10), où le procédé comprend en outre l'étape qui consiste à prendre le deuxième élément de plaque (6) et à fournir une section de joint (41, 42) dans le deuxième élément de plaque (6), où la plus petite largeur (t) des échancrures (16) correspond au rayon (r) du cercle correspondant à l'arc de cercle des saillies (14).

10. Procédé selon la revendication 9, **caractérisé en ce que** le procédé comprend l'étape qui consiste à fournir un premier élément de plaque (4) et un deuxième élément de plaque (6) et à assembler le premier élément de plaque (4) et le deuxième élément de plaque (6) par pression mécanique et/ou poinçonnage des éléments de plaque (4, 6) ensemble et à fournir éventuellement un joint adhésif au niveau de l'espace (34) entre le premier élément de plaque (4) et le deuxième élément de plaque (6).

Fig. 1

Fig. 2

a)

b)

a)

b)

Fig. 3

Fig. 4

Fig. 5

Fig. 6

EP 2 877 750 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- DE 102009051154 A1